# EUROPEAN PATENT APPLICATION

(11) **EP 0 564 764 A1**
(43) Date of publication of application: **13.10.1993**
(21) Application number: 93100867.6
(22) Date of filing: 21.01.1993
(51) Int. Cl.: A01K 15/02

(54) **An article for animals entertainment**

(30) Priority: 08.04.1992 IT MI920345 U
(71) Applicant: CIUFFO GATTO S.r.L., I-10138 Torino (IT)
(72) Inventor: Leo, Franca, I-10138 Torino (IT)
(74) Representative: Gerbino, Angelo

(57) **Abstract**

An article for animals entertainment, particularly pets, has a familiar appealing shape for the animal to whom it is aimed; advantageously, the article is composed of a plastics material obtained from natural polymer and is provided with the shape of a food item that may be appreciated by the animal.

## Description

This invention relates to an article for animals entertainment, particularly intended for pets.

It is a well known fact that animals often like to play with objects of all kinds that they may retrieve, using them for their entertainment.

In the specific instance of pets, specifically dogs and cats, they usually like to play with discarded household objects, as their owners may intentionally or casually have set them aside for this use.

These objects, following prolonged use, may even become familiar to the animal, such that the animal often grow attached to them.

It is the purpose of this invention to provide an entertainment article of the kind outlined above, which is so designed and structured as to be specially attractive for the animal to whom it is aimed.

According to the present invention, this purpose is achieved by an article as specified above and characterized in the appended claims.

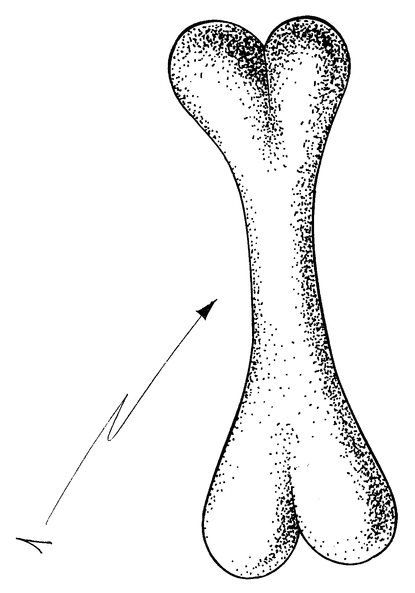

Further features and the advantages of this invention will be more clearly apparent from the following detailed description of an embodiment thereof, given by way of example and not of limitation with reference to the accompanying drawing, whose single view illustrates an article according to the invention.

With reference to the drawing, an article according to the invention is generally shown at 1 and has the appearance of a bone that may be commonly given to dogs.

This bone-like article is formed from an eatable support material, consisting of a plastics material obtained from natural polymers; in a preferred embodiment of the invention, a product commercially known as MATER-BI and manufactured by NOVAMONT COMPANY, is used as this plastics material.

An article for animals entertainment, according to this invention, affords a great number of advantages.

In the embodiment just described, the article has a shape with which the addressed animal, presently a dog, is likely to be familiar, and into which the animal would rather bite like in any other item of his standard diet. In fact, the entertainment article of this invention could advantageously be provided with the shape of a food item that may appeal to the animal and therefore, even with the shape of a piece of meat where a dog is involved.

Further, the plastics with which the bone is formed has an alluring smooth appearance, is odorless in its normal state, and has proved to be exceedingly attractive for animal species on which it has been tested.

In addition, the aforesaid plastics can be digested by the animal, and if shattered, it would produce no sharpened fragments that could be harmful for the animal.

Another advantage of this invention resides in that the plastics material of which it is made can be processed using standard methods and equipment conventionally employed in the plastics processing art; this enables the entertainment article for animals to be formed in any shape and size. Further, the aforesaid plastics mad be processed into a porous structure whereby any desired additional substance can be associated with the inventive article to enhance its qualities. Such would be the case, for instance, of nourishing integrative substances of the kind of vitamins, proteins, mineral salts, or flavouring substances effective to enhance the attractiveness of the inventive article for the intended animal.

Therefore, it should be emphasized that dependending on the application for which the article of this invention is intended, that is either domestic or wild animal species, the same can be made in different forms. As an example where a cat is involved, it could be made in the shape of a fish, or a small mouse, or any other item of food appreciated by this animal.

## Claims

1. An article for animals entertainment, in particular pets, of the type provided with a familiar appealing shape for the animal to whom it is aimed, characterized in that it is basically composed of a plastics material obtained from natural polymers.

2. An article according to Claim 1, characterized in that it is provided with the shape of a food item.

3. An article according to Claim 2, characterized in that it comprises, associated with said plastics material, a generic eatable substance.

4. An article according to Claim 3, characterized in that it is made in a bone-like shape.
